(19) Europäisches Patentamt / European Patent Office / Office européen des brevets

(11) **EP 3 837 111 B1**

(12) **EUROPEAN PATENT SPECIFICATION**

| | |
|---|---|
| (45) Date of publication and mention of the grant of the patent:<br>**18.12.2024 Bulletin 2024/51** | (51) International Patent Classification (IPC):<br>**B32B 27/08** (2006.01)  **B32B 27/28** (2006.01)<br>**B32B 27/32** (2006.01)  **B32B 27/36** (2006.01)<br>**C08J 5/18** (2006.01) |
| (21) Application number: **19753340.9** | |
| (22) Date of filing: **12.08.2019** | (52) Cooperative Patent Classification (CPC):<br>**B32B 27/08; B32B 27/283; B32B 27/32;**<br>**B32B 27/36;** B32B 2250/03; B32B 2250/24;<br>B32B 2250/40; B32B 2264/02; B32B 2264/10;<br>B32B 2264/102; B32B 2307/7244; B32B 2307/7246;<br>B32B 2307/732; B32B 2439/70 |
| | (86) International application number:<br>**PCT/EP2019/071598** |
| | (87) International publication number:<br>**WO 2020/035449 (20.02.2020 Gazette 2020/08)** |

(54) **FILM COMPOSITION HAVING ENHANCED OXYGEN BARRIER PROPERTY AND LOW MOISTURE SENSITIVITY**

FOLIENZUSAMMENSETZUNG MIT VERBESSERTEM SAUERSTOFFBARRIEREIGENSCHAFTEN UND NIEDRIGER FEUCHTIGKEITSEMPFINDLICHKEIT

COMPOSITION DE FILM AYANT UNE PROPRIÉTÉ AMÉLIORÉE DE BARRIÈRE À OXYGÈNE ET UNE FAIBLE SENSIBILITÉ À L'HUMIDITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2018 US 201862719382 P**

(43) Date of publication of application:
**23.06.2021 Bulletin 2021/25**

(73) Proprietor: **SABIC Global Technologies B.V.**
**4612 PX Bergen op Zoom (NL)**

(72) Inventors:
• **DHANABALAN, Anantharaman**
**6160 GA Geleen (NL)**
• **SOLIMAN, Maria**
**6160 GA Geleen (NL)**

• **MOIDEEN, Mohamed, Ashraf**
**6160 GA Geleen (NL)**
• **GANAPATHY BHOTLA, Venkata,**
**Ramanarayanan**
**6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
WO-A1-03/050620      WO-A1-2007/026935
CN-A- 1 266 873       CN-U- 203 427 409
JP-A- 2004 001 417    JP-A- 2004 216 566
JP-A- 2013 191 373    US-A- 3 111 535
US-A- 5 462 779       US-A1- 2011 220 532

**Description**

**FIELD OF INVENTION**

The invention relates to the field of film compositions.

**BACKGROUND**

Prolonged exposure to moisture and oxygen causes food spoilage, especially during transportation and storage. Multilayer films have proven to be particularly useful, as they limit the exposure of packaged food items to moisture and air when such multilayer films are used as packaging films. Typically, such films contain both moisture and oxygen barrier layers laminated together with adhesive tie layers, forming films having both moisture and oxygen barrier properties with desired level of film structural integrity.

Ordinarily, the moisture barrier layers are formed from hydrophobic non-polar polymeric material such as polyethylene, polyethylene terephthalate, polypropylene, while the oxygen barrier layers are formed from hydrophilic polar materials such as ethylene vinylene alcohol (EVOH), polyvinylidene chloride (PVDC), polyvinyl alcohol (PVOH), and polyamide (PA). Particularly, hydroxyl containing polymers such as EVOH and PVOH have excellent oxygen barrier property owing to its high concentration of hydroxyl groups which form a network of inter and intra molecular hydrogen bonds resulting in the formation of crystalline domains. The hydrogen bonded crystalline domains, particularly impart excellent oxygen barrier property to films, as it enables the dissolution of permeating oxygen molecules and thereby limits the passage of oxygen through the film.

Unfortunately, films containing polymers having high concentration of hydroxyl groups such as EVOH and PVOH, particularly films containing polymers having pendant hydroxyl groups, suffer from the drawback of having reduced oxygen barrier property on prolonged exposure to high moisture environment, which is a major problem for storing and transporting food items under high humid conditions. The deterioration in oxygen barrier property for films is particularly rapid at high humidity as the hydrogen bonded crystalline domain is disrupted upon exposure to moisture.

Further, films containing EVOH, are difficult to recycle as the layers containing EVOH cannot be easily segregated during recycling, making the use of such films less desirable from an environmental perspective. Similarly, films containing PVDC are difficult to dispose and recycle due to the presence of chlorine which makes such films environmentally hazardous, especially when such films are subjected to sintering during the recycling process. WO2007026935 relates to gas barrier films.

Another drawback ordinary multilayer films suffer from is film delamination, a property that causes a film to lose its barrier property as well as its structural integrity. Film delamination is generally caused by the incompatibility between the hydrophilic polar oxygen barrier layers and the hydrophobic non-polar moisture barrier layers, thereby leading to non-adhesion of the film layers. To overcome the drawback of film delamination, solutions such as the usage of tie layers, surface pretreatment, and application of metallic/ceramic coating on film surfaces have been proposed in literature and various journals. Unfortunately however, all such solutions suffer from one or more problems of increasing the cost of production, causing the formation of film defects, and/or reducing the flexibility and/or fatigue resistance of films.

Ordinary multilayer films may be prepared using conventional coating process such as a sol-gel process or a dip-coating process, which involves the step of coating an oxygen barrier dispersion containing a dispersing solvent over a polymeric substrate, followed by a drying step to remove the dispersing solvent. In certain instances, the drying step causes crack formation on the oxygen barrier layer leading to lower flexibility and lower fatigue resistance to the resulting film. Further, such coating processes in general have low throughput rate of film production, making such production techniques suffer from low production efficiency.

From the foregoing reasons, there remains a need to develop a film composition with one or more benefits of (i) retaining high oxygen barrier property under prolonged exposure to humidity, (ii) having reduced susceptibility to film delamination, (iii) having excellent flexibility, and (iv) having low film thickness while retaining the required oxygen and moisture barrier properties.

**SUMMARY**

The invention relates to a composition comprising a film having a first polymeric moisture barrier layer comprising a first non-polar polymer, a second polymeric moisture barrier layer comprising a second non-polar polymer and at least one extruded oxygen barrier layer positioned between the first polymeric moisture barrier layer and the second polymeric moisture barrier layer, wherein the extruded oxygen barrier layer comprises a blend of (i) a polyethylene oxide component and (ii) an alkoxy silane component.

In one embodiment of the invention, the polyethylene oxide component is represented by Formula I as given below:

$$H-(O-CH_2-CH_2-)_n-O-H$$

wherein "n" is an integer having a value ranging from 1 to 100. In some embodiments of the invention, the polyethylene oxide component is present at an amount ranging from about 90 wt.% to about 99.8 wt.% of the extruded oxygen barrier layer. In some embodiments of the invention, the blend comprises more than 0 wt.% to about 5 wt.% of a polycondensation reaction product between the polyethylene oxide component and the alkoxy silane component. In some embodiments of the invention, the blend comprising the polyethylene oxide component and the alkoxy silane component has a molecular weight ranging from about 2,500 g/mol to about 25,000 g/mol.

In one aspect of the invention, the alkoxy silane component is represented by Formula II:

$$(R^1)_{4-x}Si(OR^2)_x$$

wherein $R^1$ is independently selected from the group consisting of hydrogen, $C_1$-$C_{20}$ alkyl, $C_1$-$C_{20}$ alkenyl, $C_1$-$C_{20}$ alkyne; $R^2$ is independently selected from the group consisting of $C_1$-$C_{20}$ alkyl, $C_1$-$C_{20}$ alkenyl, $C_1$-$C_{20}$ alkyne; and x is an integer ranging from 1 to 3. In some embodiments of the invention, the alkoxy silane component is present in an amount ranging from 0.2 wt.% to 10 wt.% of the extruded oxygen barrier layer.

In one aspect of the invention, the extruded oxygen barrier layer has a water contact angle ranging from about 75° to about 110°. In some embodiments of the invention, the difference between the water contact angle of the extruded oxygen barrier layer and the water contact angle of either the first polymeric moisture barrier layer or the water contact angle of the second polymeric moisture barrier layer, is in the range of about 0° to about 55°.

In an another aspect of the invention, the extruded oxygen barrier layer is prepared by a method comprising: (a) mixing the polyethylene oxide component with an alkoxy silane component and forming a blend; (b) feeding the blend into a feeding zone of an extruder and forming a precursor mixture; (c) melt mixing the precursor mixture within the extruder with counter rotating screws and forming an extruded mixture; and (d) film extruding the extruded mixture and forming the extruded oxygen barrier layer.

In some embodiments of the invention, the extruded oxygen barrier layer comprises an amino silane component represented by Formula III:

$$((R^4)N-R^5)_{(4-y)}Si(OR^3)_y$$

wherein $R^3$ and $R^5$ is independently selected from the group consisting of $C_1$-$C_{20}$ alkyl, $C_1$-$C_{20}$ alkenyl, $C_1$-$C_{20}$ alkyne; $R^4$ is independently selected from the group consisting of hydrogen, $C_1$-$C_{20}$ alkyl, $C_1$-$C_{20}$ alkenyl and $C_1$-$C_{20}$ alkyne; and y is any integer ranging from 1 to 3.

In some embodiments of the invention, the extruded oxygen barrier layer comprises a plurality of silica nanoparticles, each having a particle size ranging from about 5 nanometers to about 500 nanometers.

In one aspect of the invention, the extruded oxygen barrier layer has an oxygen transmission rate ranging from about 0.01 cc/m$^2$/day to about 20 cc/m$^2$/day, determined in accordance with AST D3985-05 at a temperature of 23°C and at a relative humidity of 0%. In some embodiments of the invention, the first polymeric moisture barrier layer and the second polymeric moisture barrier layer has a water vapor transmission rate ranging from about 0.1 g/m$^2$/day to about 20 g/m$^2$/day, when determined in accordance with ASTM F1249 or ASTM E96 methods.

In one embodiment of the invention, the first non-polar polymer and the second non-polar polymer is independently selected from the group consisting of polyethylene, polypropylene, polyethylene terephthalate, polybutylene terephthalate and combinations thereof.

In one aspect of the invention, the film has a relative oxygen transmission rate ranging from 0% to 150%, when determined using Formula (IV):

$$\text{Relative Oxygen Transmission Rate} = (((OTR)_{Rhx} - (OTR)_{Rh0})/ (OTR)_{Rh0}) \times 100$$

wherein (a) $(OTR)_{Rhx}$ is the oxygen transmission rate of the film measured at a relative humidity of Rhx ranging from 0 % to 80% with an exposure time ranging from 24 hours to 48 hours; and (b) $(OTR)_{Rh0}$ is the oxygen transmission rate of the film measured at a relative humidity of 0%, with an exposure time ranging from 24 hours to 48 hours.

In one aspect of the invention, the invention describes a process for preparing a composition comprising a film, wherein the process includes (i) extruding a first non-polar polymer in a first extruder and forming a first polymeric moisture barrier layer; (ii) extruding a second non-polar polymer in a second extruder and forming a second polymeric moisture barrier layer; (iii) extruding a blend comprising: (a) a polyethylene oxide component and (b) an alkoxy silane component, in a third extruder and forming an extruded oxygen barrier layer; and (iv) laminating the extruded oxygen barrier layer between the first polymeric moisture barrier layer and the second polymeric moisture barrier layer and forming the composition.

In another embodiment of the invention, the invention describes a composition comprising a film having (a) a first polymeric moisture barrier layer comprising a first non-polar polymer selected from the group consisting of polyethylene, polypropylene, polyethylene terephthalate (PET), polybutylene terephthalate (PBT) and combinations thereof; (b) a second polymeric moisture barrier layer comprising a second non-polar polymer selected from the group consisting of polyethylene, polypropylene, polyethylene terephthalate (PET), polybutylene terephthalate (PBT) and combinations thereof; and (c) at least one extruded oxygen barrier layer positioned between the first moisture barrier layer and the second moisture barrier layer, comprising: (i) about 90 wt.% to about 99.8 wt.% of a polyethylene oxide component; (ii) about 0.2 wt.% to about 10 wt.% of an alkoxy silane component; (iii) more than 0 wt.% to about 2 wt.% of an amino silane component; and (iv) more than 0 wt.% to about 2 wt.% of a plurality of silica nanoparticles. Further, the film has a thickness ranging from about 50 micron to about 200 micron.

Other objects, features and advantages of the invention will become apparent from the following figures, detailed description, and examples. It should be understood, however, that the figures, detailed description, and examples, while indicating specific embodiments of the invention, are given by way of illustration only and are not meant to be limiting. In further embodiments, features from specific embodiments may be combined with features from other embodiments. For example, features from one embodiment may be combined with features from any of the other embodiments. In further embodiments, additional features may be added to the specific embodiments described herein.

## BRIEF DESCRIPTION OF THE DRAWINGS

For a more complete understanding, reference is now made to the following descriptions taken in conjunction with the accompanying drawings.

Fig.1 is an illustration representing an embodiment of the invention having a first moisture barrier layer, a second moisture barrier layer and an extruded oxygen barrier layer positioned between the two moisture barrier layers.

Fig.2 is an illustration representing a film composition as a comparative example, in which the film uses an extruded oxygen barrier layer containing EVOH and also uses tie layers between the extruded oxygen barrier layer and the moisture barrier layers.

Fig.3 is a schematic representation of a process for preparing a film in accordance with an embodiment of the invention.

Fig.4 is a graphical representation comparing the Oxygen Transmission Rate (OTR) of a film over various conditions of relative humidity prepared under an embodiment of the invention. The data obtained for the inventive film is further compared with the data obtained from a comparative example which contains an EVOH based oxygen barrier.

## DETAILED DESCRIPTION

The invention is based, in part, on the discovery that a composition containing a film having a number of extruded moisture and oxygen barrier layers, can be used as a packaging film that can exhibit one or more benefits of (i) retaining high oxygen barrier property under prolonged exposure to humid conditions (ii) having reduced susceptibility to delamination (iii) having excellent flexibility, and, (iv) having low film thickness while retaining the required oxygen and moisture barrier properties. The invention also includes methods of making such film compositions using a more sustainable process with effective use of raw material resources. Advantageously, the film composition is designed to have unique features that enables it to be used as a packaging film, which can help in inhibiting food and beverage spoilage even when exposed to high humidity over a prolonged period of time.

The following includes definitions of various terms and phrases used throughout this specification.

The terms "about" or "approximately" or "substantially" are defined as being close to as understood by one of ordinary skill in the art. In one non-limiting embodiment the terms are defined to be within 1%, preferably, within 0.1%, more preferably, within 0.01%, and most preferably, within 0.001%.

The terms "wt.%", "vol.%", or "mol.%" refers to a weight, volume, or molar percentage of a component, respectively, based on the total weight, the total volume, or the total moles of material that includes the component. In a non-limiting example, 10 moles of a particular component present in a 100 moles of a material is 10 mol.% of component.

The use of the words "a" or "an" when used in conjunction with the term "comprising," "including," "containing," or "having" in the claims or the specification may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The method of the invention can "comprise," "consist essentially of," or "consist of" particular ingredients, components, compositions, etc., disclosed throughout the specification.

Any numerical range used through this disclosure shall include all values and ranges there between unless specified otherwise. For example, a boiling point range of 50°C to 100°C includes all temperatures and ranges between 50°C and 100°C including the temperature of 50°C and 100°C.

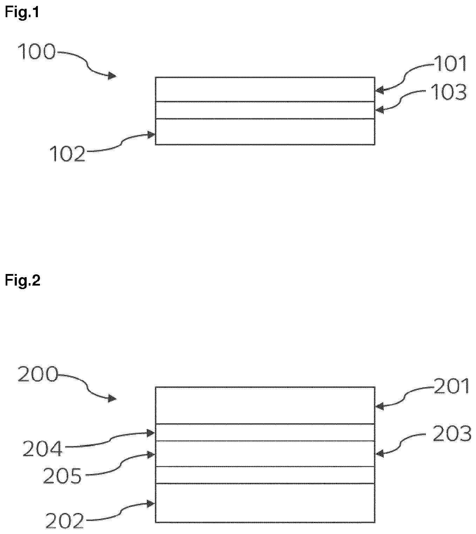

Referring to Fig.1, in a version of the invention, the composition containing the film (100) comprises a first polymeric moisture barrier layer (101) having a first non-polar polymer, a second polymeric moisture barrier layer (102) having a second non-polar polymer, and an extruded oxygen barrier layer (103) positioned between the first polymeric moisture barrier layer (101) and the second polymeric moisture barrier layer (102). In another version of the invention, the composition containing the film includes at least two polymeric moisture barrier layers with at least one extruded oxygen barrier layer positioned between the polymeric moisture barrier layers.

In an aspect of the invention, the first non-polar polymer and the second non-polar polymer is independently selected from the group consisting of polyethylene, polypropylene, polyethylene terephthalate (PET), polybutylene terephthalate (PBT) and combinations thereof. In one preferred embodiment of the invention, the first non-polar polymer and the second non-polar polymer is polyethylene. In embodiments of the invention, polyethylene includes linear low density polyethylene (LLDPE), low density polyethylene (LDPE), ultra-low density polyethylene (ULDPE), medium density polyethylene (MDPE) and high density polyethylene (HDPE). In another embodiment of the invention, polyethylene includes copolymers containing ethylene and $C_4$-$C_8$ alpha-olefins. In one embodiment of the invention, the $C_4$-$C_8$ alpha-includes 1-hexene, 1-butene, 1-octene. In another embodiment of the invention, the polypropylene is a bi-axially oriented polypropylene (BOPP).

The first polymeric moisture barrier layer (101) and the second polymeric moisture barrier layer (102) is inherently hydrophobic in nature and exhibits excellent moisture barrier property. One effective measure of the degree of hydrophobicity of a polymer surface, is by measuring the water contact angle of the polymer surface. As may be appreciated by any person skilled in the art, the higher the water contact angle, the higher is the hydrophobicity. In one aspect of the invention, each of the first polymeric moisture barrier layer **(101)** and the second polymeric moisture barrier layer **(102)** has a water contact angle independently ranging from about 100° to about 130°, alternatively from about 110° to about 125°, alternatively from about 115° to about 120°. The water contact angle may be measured by any of the standard measuring techniques known in the literature such as the sessile drop technique using a KRUSS drop shape analyzer DSA100S.

In one version of the invention, the first polymeric moisture barrier layer **(101)** and the second polymeric moisture barrier layer **(102)** has a water vapor transmission rate (WVTR) ranging from about 0.1 g/m$^2$/day to about 20 g/m$^2$/day, alternatively from about 0.5 g/m$^2$/day to about 10 g/m$^2$/day, alternatively from about 1 g/m$^2$/day to about 5 g/m$^2$/day, when determined according to ASTM F1249 or ASTM E96 methods. The water vapor transmission rate may be measured by using any of the known techniques used for such measurements, such as the one described in the patent literature US 7,405,009.

In another aspect of the invention, the non-polar polymer has a melt index ranging from about 0.6 g/10 minutes to 7 g/10 minutes, alternatively from about 1 g/10 minutes to about 3 g/10 minutes, alternatively from about 1.5 g/10 minutes to about 2.5 g/10 minutes, when measured at 190°C and with a load of 2.16 kg. In one aspect of the invention, the thickness of the first polymeric moisture barrier layer **(101)** and the second polymeric moisture barrier layer **(102)** ranges from about 10 microns to 30 microns. The thickness of the moisture barrier layers, **(101)** and **(102),** offers improved mechanical support to the overall film architecture along with excellent moisture barrier properties.

In one version of the invention, at least one extruded oxygen barrier layer **(103)** is positioned between the first polymeric moisture barrier layer **(101)** and the second polymeric moisture barrier layer **(102).** The extruded oxygen barrier layer **(103)** comprises a blend of (i) a polyethylene oxide component (PEO) and (ii) an alkoxy silane component. In one embodiment of the invention, the polyethylene oxide component may be represented by the formula given below (Formula I):

$$\text{H-(O-CH}_2\text{-CH}_2\text{-)}_n\text{-O-H}$$

wherein "n" is an integer having a value ranging from 1 to 100.

In some embodiments of the invention, the polyethylene oxide component is present at an amount ranging from about 90 wt.% to about 99.8 wt.%, alternatively from about 92 wt.% to about 97 wt.%, alternatively from about 94 wt.% to about 96 wt.%, of the extruded oxygen barrier layer **(103).** In one aspect of the invention, the molecular weight for the polyethylene oxide component ranges from about 400 g/mol to about 2,000 g/mol, alternatively from about 600 g/mol to about 1800 g/mol, alternatively from about 800 g/mol to about 1,500 g/mol. In one embodiment of the invention, the polyethylene oxide component is polyethylene glycol (PEG). For the purpose of this invention, it is preferable to use low molecular weight polyethylene oxides as this offers a higher concentration of terminal hydroxyl groups per weight of polyethylene oxide used, resulting in greater inter- and intra-chain hydrogen bond interactions between the hydroxyl groups and thereby offering a better oxygen barrier property. However, in comparison to hydroxyl group containing polymers such as EVOH and PVOH, where the presence of extensive inter- and intramolecular hydrogen bonding results in the formation of oxygen barrier crystalline domains, the oxygen barrier property for polyethylene oxide results from polar interaction between the oxygen containing polyethylene oxide back bone, which results in the formation of crystalline domain, which is less sensitive to moisture.

However, low molecular weight polyethylene oxides have poor film forming ability and cannot be processed easily during extrusion. Therefore, to overcome this drawback, in one version of the invention, the alkoxy silane component is melt blended with the polyethylene oxide component, with the alkoxy silane component functioning as a chain extending agent. The alkoxy silane component crosslinks and/or chain extends the polyethylene oxide component to increase the overall molecular weight of the polyethylene oxide component to a level at which an extrudable film can be formed from the resulting composition. In one aspect of the invention, the crosslinking and/or chain extending of the polyethylene oxide component takes place by way of a polycondensation reaction between the alkoxy/hydroxyl group of the alkoxysilane component and the hydroxyl group of the polyethylene oxide component, to form a polycondensation reaction product. In another aspect of the present invention, polyethylene oxide is melt blended with an alkoxy silane and a polycondensation reaction catalyst. In another aspect of the present invention, the crosslinking and/or chain extension of the polyethylene oxide component takes place by way of partial hydrolysis of the alkoxy groups of the alkoxy silane component. In one version of the invention, the blend comprises more than 0 wt.% to about 5 wt.%, alternatively about 1 wt.% to about 3 wt.%, alternatively about 1.5 wt.% to about 3 wt.% of the polycondensation reaction product between the polyethylene oxide component and the alkoxy silane component. The polycondensation reaction product is at optimum concentration, particularly to ensure that the film processability through extrusion is not hampered, as the high concentration of polycondensation reaction product results in extensive cross-linking which makes extrusion difficult. In another aspect of the invention, the blend comprising the polyethylene oxide component and the alkoxy silane component has a molecular weight ranging from about 2,500 g/mol to about 25,000 g/mol, alternatively from about 5,000 g/mol to about 20,000 g/mol, alternatively from about 10,000 g/mol to about 15,000 g/mol.

In one embodiment of the invention, the alkoxy silane component is represented by Formula II:

$$(R^1)_{4-x}Si(OR^2)_x$$

wherein $R^1$ is independently selected from the group consisting of hydrogen, $C_1$-$C_{20}$ alkyl, $C_1$-$C_{20}$ alkenyl, $C_1$-$C_{20}$ alkyne; $R^2$ is independently selected from the group consisting of $C_1$-$C_{20}$ alkyl, $C_1$-$C_{20}$ alkenyl, $C_1$-$C_{20}$ alkyne; and x is an integer ranging from 1 to 3. The hydrocarbon chain present in the alkoxy silane component imparts hydrophobicity to the alkoxy silane component. In an embodiment of the invention, each of $R^1$ and $R^2$ includes a substituted or an unsubstituted hydrocarbon chain. In another embodiment of the invention, each of $R^1$ and $R^2$ includes a branched or an unbranched hydrocarbon chain.

In one embodiment of the invention, the alkoxy silane component is present in an amount ranging from about 0.2 wt.% to about 10 wt.%, alternatively from about 3 wt.% to about 8 wt.%, alternatively from about 4 wt.% to about 6 wt.%, of the extruded oxygen barrier layer (103). The alkoxy silane component is selected from the group consisting of dimethoxymethyloctylsilane, dimethoxymethlyloctadecylsilane, decyldimethoxymethylsilane, dodecyldimethoxymethylsilane, cyclohexyldimethoxymethylsilane, octyltrimethoxysilane, decyltrimethoxysilane, dodecyltrimethoxysilane, octadecyltrimethoxysilane, cyclohexyltrimethoxysilane, diethoxymethlyloctadecylsilane, cyclohexyldiethoxymethylsilane, cyclohexyltriethoxysilane, octyltriethoxysilane, decyldiethoxymethylsilane, dodecyldiethoxymethylsilane, octadecyltriethoxysilane, decyltriethoxysilane, tetraethoxysilane (TEOS), tetramethoxysilane (TMOS), tetrapropoxysilane (TPOS) and mixtures thereof. In one preferred embodiment, the alkoxy silane component is dimethoxymethyloctylsilane.

In one embodiment of the invention, the extruded oxygen barrier layer (103) has a water contact angle ranging from about 75° to about 90°, alternatively from about 78° to about 85°. The values of the water contact angle of the extruded oxygen barrier layer (103) indicate the partial hydrophobicity of the extruded oxygen barrier layer (103) which helps in improving the compatibility or adhesion between the extruded oxygen barrier layer (103) and the first polymeric moisture barrier layer (101) or the second moisture barrier layer (102).

In embodiments of the invention, the extruded oxygen barrier layer (103) further comprises an amino silane component represented by Formula III:

$$((R^4)N\text{-}R^5)_{(4-y)}Si(OR^3)_y$$

wherein each of $R^3$ and $R^5$ is independently selected from the group consisting of $C_1$-$C_{20}$ alkyl, $C_1$-$C_{20}$ alkenyl, $C_1$-$C_{20}$ alkyne; $R^4$ is independently selected from the group consisting of hydrogen, $C_1$-$C_{20}$ alkyl, $C_1$-$C_{20}$ alkenyl and $C_1$-$C_{20}$

alkyne; and y is any integer ranging from 1 to 3. In an embodiment of the invention, each of $R^3$, $R^4$ and $R^5$ includes substituted or unsubstituted hydrocarbon chain. In another embodiment of the invention, each of $R^3$, $R^4$ and $R^5$ includes branched or unbranched hydrocarbon chain. The amino silane component is selected from the group consisting of 3-aminopropyltrimethoxy silane, 3-aminopropyl triethoxysilane, 3-aminopropyl methyldiethoxysilane, 3-aminopropyl methyl methoxysilane and combinations thereof. In one embodiment of the invention, the amino silane component is present in an amount more than 0 wt.% to about 2 wt.%, alternatively from about 0.5 wt.% to about 1.5 wt.%, alternatively from about 0.8 wt.% to about 1.2 wt.%, of the extruded oxygen barrier layer **(103)**. The amino silane component functions as an adhesion promoting agent and helps in enhancing the interfacial adhesion of the first polymeric moisture barrier layer **(101)** and the second polymeric moisture barrier layer **(102),** with the extruded oxygen barrier layer **(103).** Further, the amino silane component also helps in promoting chain extension/cross linking between the alkoxy silane component and the polyethylene oxide component, allowing the formation of an oxygen barrier layer with desired molecular weight for extrusion.

In one aspect of the present invention, fillers such as silica nanoparticles may be added to the extruded oxygen barrier layer **(103)** in an amount sufficient to increase the oxygen barrier property of the extruded oxygen barrier layer **(103).** Without intending to be limited by any theory, it is believed that the silica nanoparticles creates a tortuous pathway in a film, which slows down the transmission rate of permeating oxygen. On the other hand, if high concentration of the silica nanoparticles is added to the extruded oxygen barrier layer, mechanical properties of the film **(100)** is deteriorated. In one aspect of the invention, the silica nanoparticles impart desired level of reinforcement, thereby improving the mechanical property of the film. In embodiments of the invention, extruded oxygen barrier layer **(103)** comprises a plurality of silica nanoparticles, each having a particle size ranging from about 5 nanometers to about 500 nanometers, alternatively from about 20 nanometers to about 300 nanometers, alternatively from about 50 nanometers to about 200 nanometers. In one embodiment of the invention, the size distribution of the silica nanoparticles is unimodal. In another embodiment of the invention, the size distribution of the silica nanoparticles is multi-modal. The silica nanoparticles is present in an amount more than 0 wt.% to about 2 wt.%, alternatively from about 0.5 wt.% to about 1.5 wt.%, alternatively from about 0.8 wt.% to about 1.2 wt.%, of the extruded oxygen barrier layer **(103).**

In one aspect of the invention, the extruded oxygen barrier layer **(103)** is prepared by a method comprising: (i) mixing the polyethylene oxide component with an alkoxy silane component and forming a blend; (ii) feeding the blend into a feeding zone of an extruder and forming a precursor mixture; (iii) melt mixing the precursor mixture within the extruder with counter rotating screws and forming an extruded mixture; and (iv) film extruding the extruded mixture and forming the extruded oxygen barrier layer **(103).** In an embodiment of the invention, a polycondensation reaction catalyst is added to the blend in an amount sufficient to form the polycondensation reaction product. In another embodiment of the invention, the extruded mixture is compression molded to form the extruded oxygen barrier layer **(103).** In an embodiment of the invention, the polyethylene oxide component and the alkoxy silane component is mixed in the absence of a solvent. The term "absence of a solvent" as used herein, means that no solvent is used for dispersing the blend and thereby the resulting blend can be used directly for melt extrusion instead of a coating or a sol-gel process. In some embodiments of the invention, the polyethylene oxide component and the alkoxy silane component is introduced separately in the extruder to form the blend within the barrel of the extruder. In embodiments of the invention, the blend is fed to the feeding zone of the extruder at a feed rate of at least 4 Kg/hr, alternatively at a feed rate ranging from about 5 Kg/hr to about 8 Kg/hr.

In one aspect of the invention, the extruded oxygen barrier layer **(103)** has an Oxygen Transmission Rate (OTR) ranging from about 0.01 cc/m$^2$/day to about 20 cc/m$^2$/day, alternatively from about 1 cc/m$^2$/day to about 15 cc/m$^2$/day, alternatively from about 5 cc/m$^2$/day to about 10 cc/m$^2$/day when determined in accordance with ASTM D3985-05 at a temperature of 23°C and a relative humidity of 0%. In embodiments of the invention, the extruded oxygen barrier layer **(103)** has a thickness ranging from about 1 microns to about 10 microns, alternatively from about 3 microns to about 8 microns, alternatively from about 4 microns to about 6 microns.

The composition containing the film can be prepared by any process that enables the preparation of a film encompassed by the invention. In one embodiment, the process can be a co-extrusion. The process can use at least one extruder. Alternatively the process uses at least two extruder working in tandem, or the process uses at least three extruder working in tandem.

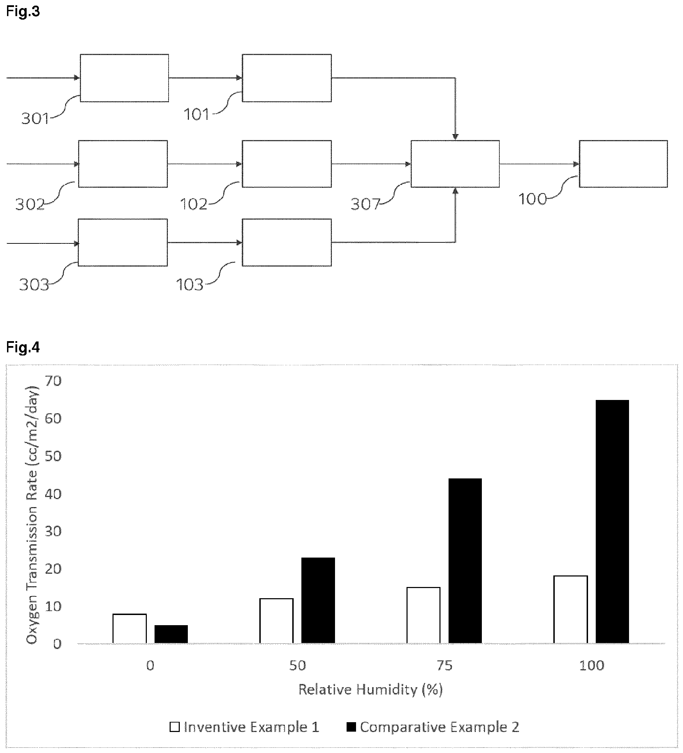

More particularly, referring to Fig.3, in one embodiment of the invention, a process for preparing a composition containing a film **(100),** comprises the steps of (i) extruding a first non-polar polymer in a first extruder **(301)** and forming a first polymeric moisture barrier layer **(101);** (ii) extruding a second non-polar polymer in a second extruder **(302)** and forming a second polymeric moisture barrier layer **(102);** (iii) extruding a blend comprising: (a) a polyethylene oxide component and (b) an alkoxy silane component, in a third extruder **(303)** and forming an extruded oxygen barrier layer **(103);** and (iv) laminating **(307)** the extruded oxygen barrier layer **(103)** between the first polymeric moisture barrier layer **(101)** and the second polymeric moisture barrier layer **(102)** and forming the composition containing the film **(100).** The first extruder and the second extruder are operated at a barrel temperature ranging from about 180°C to about 220°C, alternatively from about 200°C to about 210°C, with a screw rotation speed ranging from about 200 rpm to about 300 rpm , alternatively from about 225 rpm to about 275 rpm. The third extruder is operated at a barrel temperature ranging from about 100°C to about 200°C, alternatively from about 110°C to about 180°C with a screw rotation speed of the extruder ranging from about 200 rpm to about 300 rpm. The lamination may be carried out by any of the drawing processes known in the literature including heated roller processing, and compression molding. For each extrusion process, the layers formed may be drawn using any one of the known drawing process such as roll uniaxial drawing, rolling, consecutive biaxial drawing, simultaneous biaxial drawing, tubular drawing depending on the desired film thickness and the target mechanical property of the film. In an aspect of the invention, the extrusion process for forming the film **(100),** is particularly advantageous over a conventional coating process, involving a sol-gel or dip-coating techniques, in terms of producing films at high throughput rate and producing films having excellent flexibility.

Referring back to Fig.1, in one aspect of the invention, the film **(100)** has an optimum thickness without compromising on the barrier properties or the film flexibility. In one embodiment of the invention, the film **(100)** has a thickness ranging from about 30 microns to about 52 microns, alternatively a thickness ranging from about 35 microns to about 49 microns, alternatively from about 40 microns to about 45 microns. In an embodiment of the invention, the compatibility of the hydrophilic extruded oxygen barrier layer and hydrophobic moisture barrier layers is improved leading to a reduced susceptibility for film delamination. Without being bound to any specific theory, the hydrocarbon chains present in the alkoxy silane component helps in improving the compatibility of the extruded oxygen barrier layer **(103)** with the first polymeric moisture barrier layer **(101)** and with the second polymeric moisture barrier layer **(102)** with excellent adhesion between the layers. The hydrocarbon chains of the alkoxy silane component imparts partial hydrophobicity to the otherwise hydrophilic extruded oxygen barrier layer **(103)** rendering the extruded oxygen barrier layer **(103)** compatible with the first polymeric moisture barrier layer **(101)** and with the second polymeric moisture barrier layer **(102).**

As may be appreciated by a person ordinary skilled in the art, a suitable metric to measure the improved compatibility between the hydrophilic polar extruded oxygen barrier layers and the hydrophobic moisture barrier layers is by measuring the difference in water contact angle of the layers, with an understanding that the greater the difference in water contact angle between the layers, the more incompatible the layers are with each other, and therefore more prone to delamination. In an embodiment of the invention, the difference between the water contact angle of the extruded oxygen barrier layer **(103)** and the water contact angle of either the first polymeric moisture barrier layer **(101)** or the water contact angle of the second polymeric moisture barrier layer **(102),** is in the range of about 10° to about 55°, alternatively of about 20° to about 40°, alternatively about 25° to about 35°.In another embodiment of the invention, the film **(100)** may optionally include tie layers to further enhance the compatibility of the extruded oxygen barrier layer **(103)** with the first polymeric moisture barrier layer **(101)** and the second polymeric moisture barrier layer **(102)** and reduce the tendency of film delamination especially in application areas which require the film to be subjected to intense mechanical bending.

It is particularly desirable to have multilayer films which offers low modulus and / or high flexibility, for application in packaging while retaining the desired barrier properties. In one embodiment of the invention, the film **(100)** has a tensile modulus of elasticity ranging from about 160 MPa to about 250 MPa, alternatively from about 180 MPa to about 220 MPa, alternatively from about 190 MPa to about 210 MPa, when determined in accordance with ISO 572-3 method. The modulus of the film **(100)** indicates that the film has an optimum flexibility, suitable for application as a packaging film for packaging food and beverage. In an embodiment of the invention, the composition containing the film **(100)** is used as a packaging film. In another embodiment, the packaging film is a food-grade packaging film.

In an aspect of the invention, the film **(100)** offers high oxygen barrier property retention even when exposed to humid conditions over a prolonged period of time and thereby preventing the spoilage of food and beverage which is packed within the packaging material containing the film **(100).** Relative Oxygen Transmission Rate is a suitable measure to determine the sensitivity of oxygen transmission at various levels of relative humidity. The lower the relative oxygen transmission rate, the better is the ability of the film to retain oxygen barrier property even when subjected to prolonged exposure to humidity. In an embodiment of the invention, the film **(100)** has a Relative Oxygen Transmission Rate ranging from 0% to 150%, alternatively from about 5% to about 125 %, alternatively from about 10% to about 100%, when determined using Formula (IV):

$$\text{Relative Oxygen Transmission Rate} = (((OTR)_{Rhx} - (OTR)_{Rh0})/ (OTR)_{Rh0}) \times 100$$

wherein, (a) $(OTR)_{Rhx}$ is the oxygen transmission rate of the film **(100)** measured at a relative humidity of Rhx, ranging from 0 % to 100% with an exposure time ranging from 24 hours to 48 hours; (b) $(OTR)_{Rh0}$ is the oxygen transmission rate of the film **(100)** measured at a relative humidity (Rh0) of 0% with an exposure time ranging from 24 hours to 48 hours. Exposure time measures the amount of time a film is exposed to a specific humid environment and helps ascertaining the change of oxygen barrier property of the film over time. The oxygen transmission rate (OTR) may be measured by ASTM D3985-05 standard. The Relative Oxygen Transmission Rate of the film **(100)** demonstrates the extent to which the film **(100)** is able to retain high oxygen barrier property even at a high relative humidity. This is particularly, advantageous for using the film for packaging food and beverage, especially during transportation and storage.

In embodiments of the invention, the film **(100)** may be recycled by using any of the process known in the literature without any specific environmental harm. Particularly, as the film is free of halogen compounds the recycling of the film **(100)** is environmentally more sustainable. The different layers of the film **(100)** may be separated and/or peeled off and recycled for further processing using conventional recycling technics and apparatus such as the method disclosed in EP 0801168A1.

In one embodiment of the invention, the film **(100)** contains one or more additive selected from a nucleating agent, anti-static agent, light stabilizer, lubricant, surface-active agent, anti-blocking agent, anti-oxidative agent, present in a proportion that will not unduly compromise the mechanical property of the film **(100).**

Accordingly, the invention includes embodiments that include film compositions that exhibits one or more benefits of (i) retaining high oxygen barrier property under prolonged exposure to humid conditions (ii) having reduced susceptibility to delamination, (iii) having excellent flexibility, and (iv) having low film thickness while retaining the required oxygen and moisture barrier properties. The invention also includes methods of making such compositions using a more sustainable process, with an effective use of raw material resources. Advantageously, the film composition now enables artisans to design films having unique features that enables it to be used as a packaging film, which can help in inhibiting food and beverage spoilage even upon exposure to high humidity.

Specific examples demonstrating some of the embodiments of the invention are included below. The examples are for illustrative purposes only and are not intended to limit the invention.

EXAMPLES

**Example 1**

**Preparation and characterization of a composition containing a film in accordance with an embodiment of the invention**

<u>Purpose:</u> Example 1 demonstrates the preparation and material characterization results of a composition containing a film prepared in accordance with an embodiment of the invention. Referring to Fig.1, the film **(100)** represents an embodiment of the invention, describing the film architecture and positions of the different layers with respect to each other. Fig.3, illustrates the procedure for preparing the film **(100),** the details of which is discussed below:

<u>Materials:</u> The following materials are procured and used for the synthesis of the composition containing the film including the polymeric moisture barrier layer and extruded oxygen barrier layer.

Table1: Materials and Equipment

| Material | Description | Material/Equipment Description | Supplier |
|---|---|---|---|
| First non-polar polymer | Linear low density polyethylene (118NE) | Density: 915-925 Kg/m$^3$ MFI: 0.9 -3.2 g/ 10 min at 190 °C and with 2.16 Kg | SABIC |
| Second non-polar polymer | Linear low density polyethylene (118NE) | Density: 915-925 Kg/m$^3$ MFI: 0.9 -3.2 g/ 10 min at 190°C and with 2.16 Kg | SABIC |
| Polyethylene oxide component | Polyethylene glycol (POLYGLYKOL®) | Molecular Weight: 300 - 35000 | Clariant |
| Alkoxysilane component | Dimethoxymethyloctylsilane | | Aldrich |
| Silica nanoparticles | Nanosilica (AERoSIL®) | Size: 50 nanometers | EVONIK |
| Tie Layer | NA | NA | NA |
| Extruder used | | Maximum Screw Rotation Speed: 125 RPM | Coprion ZSK 25 |

<u>Process/Procedure:</u> Referring to Fig.3, the following method for preparing a composition for a film **(100)** is practiced for the purpose of this Example. The method i) extrudes a first non-polar polymer in a first extruder **(301)** and forms a first polymeric moisture barrier layer **(101);** (ii) extrudes a second non-polar polymer in a second extruder **(302)** and forming a second polymeric moisture barrier layer **(102);** (iii) extrudes a blend containing: (a) a polyethylene oxide component and (b) an alkoxy silane component, in a third extruder **(303)** and forms an extruded oxygen barrier layer **(103);** and (d) laminates **(307)** the extruded oxygen barrier layer **(103)** between the first polymeric moisture barrier layer **(101)** and the second polymeric moisture barrier layer **(102)** and forms the film **(100).** The lamination is carried out using a heated roller processor operated at around 210°C. The first extruder **(301)** and the second extruder **(302)** are operated at a barrel temperature of about 205°C with a screw rotation speed of about 35% of 125 RPM. The third extruder is operated at a barrel temperature of about 150°C with a screw rotation speed of about 30% of 125 RPM. For each process of extrusion the feed rate is kept at 6 Kg/hr.

Particularly, the extruded oxygen barrier layer **(103)** is prepared by a method that (i) mixes the polyethylene oxide component with an alkoxy silane component in the absence of a solvent and forming the blend; (ii) feeds the blend into a feeding zone of an extruder and forming a precursor mixture; (iii) melt mixes the precursor mixture within the third extruder with counter rotating screws and forms the extruded mixture; and (iv) film extruding the extruded mixture and forming the extruded oxygen barrier layer **(103).** The polyethylene oxide component and alkoxy silane component are blended together at a proportion of 93 wt.% of polyethylene oxide component and 4 wt.% of alkoxy silane component. Further, additional components of 1.5 wt.% of amino silane component and 1.5 wt.% of silica nanoparticles, is added to the precursor mixture prior to extrusion.

**Operating parameters for film preparation:** The first extruder and the second extruder are operated at similar operating parameters as the material used for extrusion is similar. The details of the other operating parameters for the process of extrusion is given below:

Table 2: Operating parameters

|  | First Extruder | Second Extruder | Third Extruder | Lamination Heated Roller Process |
|---|---|---|---|---|
| Temp (°C) | 205 | 205 | 150 | 200 |
| Screw Speed (RPM) | 250 | 250 | 240 | Not applicable |
| Feed rate (Kg/hr) | 6.5 | 6.5 | 6.5 | |
| Output per Hour (kg/hr) | 6 | 6 | 8 | Not applicable |

**Results:** The composition containing the film **(100)** is analyzed and characterized using various material analysis techniques as described and provided under Table 3. The thickness of the first polymeric moisture barrier layer **(101),** the second polymeric moisture barrier layer **(102)** and the extruded oxygen barrier layer **(103)** is measured using a thickness gauge or Vernier caliper.

Table 3: Film **(100)** layer architecture

| Tie Layer Thickness (micron) | Thickness of First Polymeric Moisture Barrier Layer (micron) | Thickness of Second Polymeric Moisture Barrier Layer (micron) | Thickness of Extruded oxygen barrier layer (micron) | Overall Film Thickness (micron) |
|---|---|---|---|---|
| 0 | 20 | 20 | 8 | 48 |

The water contact angle for the different film layers is measured by the sessile method test using a KRUSS drop shape analyzer DSA100S.

Table 4: Modulus and Water Contact Angle

| Modulus (MPa) | Water Contact Angle of Extruded oxygen barrier layer (degree) | Water Contact Angle of First Moisture Barrier Layer (degree) | Water Contact Angle of Second Moisture Barrier Layer (degree) |
|---|---|---|---|
| 195 | 88 | 125 | 125 |

The oxygen transmission rate (OTR) of the film **(100)** is measured at a constant temperature of 23°C under different conditions of relative humidity ranging from 0% relative humidity to 100% relative humidity. For each condition of relative humidity, the film **(100)** is exposed for 24 hours. The Relative Oxygen Transmission Rate is measured using Formula IV. The results obtained is tabulated below:

Table 5: Variation of OTR with Relative Humidity

| Relative Humidity (Rhx) | Film Exposure Time (hours) | Water Vapor Transmission Rate (WVTR) (g/m²/day) | Oxygen Transmission Rate (OTR) (cc/m²/day) | Relative Oxygen Transmission Rate (%) |
|---|---|---|---|---|
| 0 | 24 | 1.1 | 8 | NA |
| 50 | 24 | 1.1 | 12 | 50 |
| 75 | 24 | 1.1 | 15 | 87.5 |
| 100 | 24 | 1.1 | 18 | 125 |

The modulus of the film (100) is obtained by using the standard prescribed under ISO 572-3. Some of the other key results are summarized and tabulated under Table 6. The results obtained from the inventive Example 1 is compared with the results obtained from the comparative Example 2 and summarized under Table 12.

Table 6: Results

| Modulus (MPa) | Average Relative Oxygen Transmission Rate (%) | Thickness of the Film (micron) | Difference in Water Contact Angle between Extruded oxygen barrier layer and Second Polymeric Moisture Barrier Layer | Difference in Water Contact Angle between Extruded oxygen barrier layer and First Polymeric Moisture Barrier Layer |
|---|---|---|---|---|
| 195 | 87.5 | 48 | 37 | 37 |

**Example 2 (Comparative)**

**Preparation and characterization of a composition containing a film having Ethylene Vinyl Alcohol (EVOH) as part of the extruded oxygen barrier layer**

**Purpose:** Example 2 is a comparative example to demonstrate the oxygen barrier property of a film containing EVOH, when exposed at high relative humidity. Further, the purpose of the Example is also to demonstrate the extent of compatibility between an EVOH containing extruded oxygen barrier layer and the moisture barrier layers by measuring the difference in the water contact angle inherent to each layer. Fig.2 illustrates the film architecture and the positions of the various layers within the film (200).

**Materials:** Fig.2 illustrates the film architecture and the positions of the various layers within the film (200). Referring to Fig.2, the film architecture of the film (200) is similar to the film (100) of Example 1, except that tie layer (204) and tie layer (205) are positioned between the extruded oxygen barrier layer (203) and the moisture barrier layers (201) and (202) respectively.

The material used for the moisture barrier layer is same as that used in Example 1. The extruded oxygen barrier layer (203) containing EVOH, is commercially obtained and is free of silane or siloxane based additives.

Table 7: Materials and Equipment

| Material | Description | Material Description | Supplier |
|---|---|---|---|
| Extruded oxygen barrier layer | EVOH | Density: 1050 - 1120 Kg / m3<br>MFI ; 3.0 - 9.0 g / 10 min | Kuraray |
| First Polymeric Moisture Barrier layer | Linear low density polyethylene (118NE) | Density: 915-925 Kg/m³<br>MFI: 0.9 - 3.2 g/ 10 min at 190 C and with 2.16 Kg | SABIC |
| Second Polymeric Moisture Barrier layer | Linear low density polyethylene (118NE) | Density: 915-925 Kg/m³<br>MFI: 0.9 - 3.2 g/ 10 min at 190 C and with 2.16 Kg | SABIC |

(continued)

| Material | Description | Material Description | Supplier |
|---|---|---|---|
| Tie Layer | Maleic Anhydride Grafted Olefin (Orevac®) | | ARKEMA |
| Extruder | | | Coprion ZSK 25 |

**Process/Procedure:** The method for preparing the film **(200)** is the same as that practiced under Example 1. The extruded oxygen barrier layer **(203)** containing EVOH is commercially obtained and is laminated between the moisture barrier layers **(201)** and **(202).** Additional extruders are used for extruding the tie layers **(204)** and **(205)** and subsequently laminated between the extruded oxygen barrier layer **(203)** and the moisture barrier layers **(201)** and **(202).**

**Operating parameters for film preparation:** The operating parameters for the process of extrusion is the same as that practiced under Example 1.

**Results:** The composition containing the film **(100)** is analyzed and characterized using various material analysis techniques as described and provided under Table 3. The thickness of the different layers is measured using a thickness gauge or Vernier caliper, and the results tabulated below.

Table 8: Film **(200)** layer architecture

| Total Tie Layer Thickness for layers (204) (205) (micron) | Thickness of Moisture Barrier Layer(201) (micron) | Thickness of Moisture Barrier Layer(202) (micron) | Thickness of EVOH Extruded oxygen barrier layer (203) (micron) | Overall Film Thickness (200) (micron) |
|---|---|---|---|---|
| 6 | 20 | 20 | 8 | 54 |

The film **(200)** containing the EVOH is analyzed and the results obtained is tabulated below:

Table 9: Film property results

| Modulus (MPa) | Water Contact Angle of tie layer (degree) | Water Contact Angle of EVOH Extruded oxygen barrier layer (degree) | Water Contact Angle of Moisture Barrier Layer(201) (degree) | Water Contact Angle of Moisture Barrier Layer (202) (degree) |
|---|---|---|---|---|
| 195 | 95 | 70 | 125 | 125 |

The oxygen transmission rate (OTR) of the film **(200)** is measured at a constant temperature of 23°C at different conditions of relative humidity with an exposure time of 24 hours for each condition of relative humidity. The results obtained is tabulated below:

Table 10: Variation of OTR with Relative Humidity

| Relative Humidity (Rhx) | Film Exposure Time (hours) | Water Vapor Transmission Rate (WVTR) (g/m$^2$/day) | Oxygen Transmission Rate (OTR) (cc/m$^2$/day) | Relative Oxygen Transmission Rate (%) |
|---|---|---|---|---|
| 0 | 24 | 1.1 | 5 | NA |
| 50 | 24 | 1.1 | 25 | 400 |
| 75 | 24 | 1.1 | 45 | 800 |
| 100 | 24 | 1.1 | 65 | 1200 |

Some of the key results are summarized and tabulated under Table 11. The results obtained from the comparative Example 2 is compared with the results obtained from the inventive Example 1 and summarized under Table 12.

Table 11: Key Results

| Modulus (MPa) | Average Relative Oxygen Transmission Rate (%) | Thickness of the Film (micron) | Difference in Water Contact Angle between Extruded oxygen barrier layer and Moisture Barrier Layer (201) (degree) | Difference in Water Contact Angle between Extruded oxygen barrier layer and Moisture Barrier Layer (202) (degree) |
|---|---|---|---|---|
| 195 | 800 | 54 | 55 | 55 |

**Summary of the results:** The results obtained from the practice of the inventive Example 1 is compared with the results obtained from the comparative Example 2. The results are summarized under Table 12 and is further discussed below:

Table 12: Summary of results from Examples

| | Example 1-Inventive Film (100) | Example 2-Comparative) Film (200) |
|---|---|---|
| Modulus (MPa) | 195 | 195 |
| Average Relative Oxygen Transmission Rate (%) | 87.5 | 800 |
| OTR at 0%Rh (cc/m$^2$/day) | 8 | 5 |
| OTR at 100% Rh (cc/m$^2$/day) | 18 | 65 |
| Water Contact Angle of Extruded oxygen barrier layer (degree) | 100 | 70 |
| Difference in Water Contact Angle between Extruded oxygen barrier layer and Moisture Barrier Layer (degree) | 25 | 55 |
| Film Thickness (micron) | 48 | 54 |

The results summarized under Table 12 indicate that the inventive film from Example 1 exhibits one or more previously unseen benefits of improved oxygen barrier retention under high humidity, improved compatibility between the hydrophilic polar extruded oxygen barrier layer and the hydrophobic non-polar moisture barrier layers, overall lower film thickness and excellent film flexibility/modulus suitable for packaging applications. From Fig.4 it is evident that EVOH containing extruded oxygen barrier layer **(203)** of Example 2, exhibits superior barrier property at 0% relative humidity compared to the inventive extruded oxygen barrier layer **(103)** of Example 1. However, with increased relative humidity, the oxygen transmission rate (OTR) for the film **(200)** increases rapidly, indicating a deterioration of the oxygen barrier property. Thus, it can be concluded that the inventive film **(100)** of Example 1, is able to offer a better retention of oxygen barrier property at high humidity. Further, the average Relative Oxygen Transmission rate for the inventive film **(100)** is at 87.5% as compared to 800% for film **(200),** indicating an almost 90% better retention of oxygen barrier property for the inventive film **(100)** in comparison to the film **(200).**

As further evidenced from Table 12, the inventive film **(100)** developed under Example 1, demonstrates improved compatibility between the film layers as inferred from the difference between the water contact angle of the hydrophilic polar extruded oxygen barrier layer **(103)** and the hydrophobic non-polar moisture barrier layers **(101)** and **(102).** For the inventive film **(100)** of Example 1, the difference in the water contact angle is less than half of that of the film **(200)** produced under comparative Example 2. As a result, the film **(200)** from Example 2 necessitate the use of tie layers **(204)** and **(205)** in order to prevent film delamination. The reduced difference in the water contact angle between the layers of inventive film **(100)** is due to the partial hydrophobicity imparted by the presence of alkyl hydrocarbon chains of the alkoxy silane component. As a result, the inventive film **(100)** has a reduced tendency for film delamination while retaining the desired level of flexibility/modulus. Further, the thickness of the inventive film **(100)** is lower than that of the film **(200),** indicating a lower consumption of raw material, thereby leading to a more sustainable product with a reduced cost of production.

**Claims**

1.  A composition comprising a film, having:

(a) a first polymeric moisture barrier layer comprising a first non-polar polymer;

(b) a second polymeric moisture barrier layer comprising a second non-polar polymer; and

(c) at least one extruded oxygen barrier layer positioned between the first polymeric moisture barrier layer and the second polymeric moisture barrier layer;

wherein the extruded oxygen barrier layer comprises a blend of (i) a polyethylene oxide component and (ii) an alkoxy silane component;

preferably wherein the film has a thickness ranging from 30 microns to 52 microns.

2. The composition of claim 1, wherein the polyethylene oxide component is represented by Formula I:

$$H\text{-}(O\text{-}CH_2\text{-}CH_2\text{-})_n\text{-}O\text{-}H$$

wherein "n" is an integer having a value ranging from 1 to 100.

3. The composition of any one of claims 1-2, wherein the polyethylene oxide component is present at an amount ranging from about 90 wt.% to about 99.8 wt.% of the extruded oxygen barrier layer.

4. The composition of any one of claims 1-3, wherein the blend comprises more than 0 wt.% to 5 wt.% of a polycondensation reaction product between the polyethylene oxide component and the alkoxy silane component.

5. The composition of any one of claims 1-4, wherein the alkoxy silane component is represented by Formula II:

$$(R^1)_{4\text{-}x}Si(OR^2)_x$$

wherein $R^1$ is independently selected from the group consisting of hydrogen, $C_1$-$C_{20}$ alkyl, $C_1$-$C_{20}$ alkenyl, $C_1$-$C_{20}$ alkyne; $R^2$ is independently selected from the group consisting of $C_1$-$C_{20}$ alkyl, $C_1$-$C_{20}$ alkenyl, $C_1$-$C_{20}$ alkyne; and x is an integer ranging from 1 to 3;

preferably wherein the extruded oxygen barrier layer further comprises an amino silane component represented by Formula III:

$$((R^4)N\text{-}R^5)_{(4\text{-}y)}Si(OR^3)_y$$

wherein $R^3$ and $R^5$ is independently selected from the group consisting of $C_1$-$C_{20}$ alkyl, $C_1$-$C_{20}$ alkenyl, $C_1$-$C_{20}$ alkyne; $R^4$ is independently selected from the group consisting of hydrogen, $C_1$-$C_{20}$ alkyl, $C_1$-$C_{20}$ alkenyl and $C_1$-$C_{20}$ alkyne; and y is any integer ranging from 1 to 3.

6. The composition of any one of claims 1-5, wherein the alkoxy silane component is present in an amount ranging from 0.2 wt.% to 10 wt.% of the extruded oxygen barrier layer.

7. The composition of any one of claims 1-6, wherein the extruded oxygen barrier layer has a water contact angle ranging from 75° to 110°, preferably wherein the difference between the water contact angle of the extruded oxygen barrier layer and the water contact angle of either the first polymeric moisture barrier layer or the water contact angle of the second polymeric moisture barrier layer, is in the range of 0° to 55°.

8. The composition of any one of claims 1-7, wherein the extruded oxygen barrier layer further comprises a plurality of silica nanoparticles, each having a particle size ranging from 5 nanometers to 500 nanometers.

9. The composition of any one of claims 1-8, wherein the extruded oxygen barrier layer has an oxygen transmission rate ranging from 0.01 cc/m²/day to 20 cc/m²/day, determined in accordance with AST D3985-05 at a temperature of 23°C and at a relative humidity of 0%; and/or

wherein the first polymeric moisture barrier layer and the second polymeric moisture barrier layer has a water vapor transmission rate ranging from 0.1 g/m²/day to 20 g/m²/day when determined in accordance with ASTM F1249 or ASTM E96 methods.

10. The composition of any one of claims 1-9, wherein the first non-polar polymer and the second non-polar polymer is independently selected from the group consisting of polyethylene, polypropylene, polyethylene terephthalate, polybutylene terephthalate and combinations thereof.

11. The composition of any one of claims 1-10, wherein the film has a relative oxygen transmission rate ranging from 0% to 150%, when determined using Formula (IV):

$$\text{Relative Oxygen Transmission Rate} = (((OTR)_{Rhx} - (OTR)_{Rh0})/(OTR)_{Rh0}) \times 100$$

wherein,

(a) $(OTR)_{Rhx}$ is the oxygen transmission rate of the film measured at a relative humidity of Rhx ranging from 0 % to 80% with an exposure time ranging from 24 hours to 48 hours,
(b) $(OTR)_{Rh0}$ is the oxygen transmission rate of the film measured at a relative humidity of 0%, with an exposure time ranging from 24 hours to 48 hours.

12. Method for preparation of the composition of any one of claims 1-11, wherein the extruded oxygen barrier layer is prepared by a method comprising:

(a) mixing the polyethylene oxide component with an alkoxy silane component and forming a blend;
(b) feeding the blend into a feeding zone of an extruder and forming a precursor mixture;
(c) melt mixing the precursor mixture within the extruder with counter rotating screws and forming an extruded mixture; and
(d) film extruding the extruded mixture and forming the extruded oxygen barrier layer.

13. A process for preparing a composition comprising a film, wherein the process comprises:

(a) extruding a first non-polar polymer in a first extruder and forming a first polymeric moisture barrier layer;
(b) extruding a second non-polar polymer in a second extruder and forming a second polymeric moisture barrier layer;
(c) extruding a blend comprising: (i) a polyethylene oxide component and (ii) an alkoxy silane component, in a third extruder and forming an extruded oxygen barrier layer; and
(d) laminating the extruded oxygen barrier layer between the first polymeric moisture barrier layer and the second polymeric moisture barrier layer and forming the composition.

14. A composition according to any one of claims 1-3 comprising a film, having:

(a) a first polymeric moisture barrier layer comprising a first non-polar polymer selected from the group consisting of polyethylene, polypropylene, polyethylene terephthalate, polybutylene terephthalate and combinations thereof;
(b) a second polymeric moisture barrier layer comprising a second non-polar polymer selected from the group consisting of polyethylene, polypropylene, polyethylene terephthalate (PET), polybutylene terephthalate and combinations thereof; and
(c) at least one extruded oxygen barrier layer positioned between the first moisture barrier layer and the second moisture barrier layer, comprising:

(i) from 90 wt.% to 99.8 wt.% of a polyethylene oxide component;
(ii) from 0.2 wt.% to 10 wt.% of an alkoxy silane component;
(iii) more than 0 wt.% to 2 wt.% of an amino silane component; and
(iv) more than 0 wt.% to 2 wt.% of a plurality of silica nanoparticles;

wherein the extruded film has a thickness ranging from 50 microns to 200 microns.

**Patentansprüche**

1. Zusammensetzung, umfassend eine Folie, die Folgendes aufweist:

(a) eine erste polymere Feuchtigkeitssperrschicht, die ein erstes nicht-polares Polymer umfasst;
(b) eine zweite polymere Feuchtigkeitssperrschicht, die ein zweites nicht-polares Polymer umfasst; und
(c) mindestens eine extrudierte Sauerstoffsperrschicht, die zwischen der ersten polymeren Feuchtigkeitssperrschicht und der zweiten polymeren Feuchtigkeitssperrschicht positioniert ist;

wobei die extrudierte Sauerstoffsperrschicht eine Mischung aus (i) einer Polyethylenoxidkomponente und (ii) einer Alkoxysilankomponente umfasst;

wobei die Folie vorzugsweise eine Dicke im Bereich von 30 Mikrometern bis 52 Mikrometern aufweist.

2.  Zusammensetzung nach Anspruch 1, wobei die Polyethylenoxidkomponente durch Formel I dargestellt ist:

$$H-(O-CH_2-CH_2-)_n-O-H$$

wobei "n" eine ganze Zahl ist, die einen Wert im Bereich von 1 bis 100 aufweist.

3.  Zusammensetzung nach einem der Ansprüche 1-2, wobei die Polyethylenoxidkomponente in einer Menge im Bereich von etwa 90 Gew.-% bis etwa 99,8 Gew.-% der extrudierten Sauerstoffsperrschicht vorhanden ist.

4.  Zusammensetzung nach einem der Ansprüche 1-3, wobei das Gemisch mehr als 0 Gew.-% bis 5 Gew.-% eines Polykondensationsreaktionsprodukts zwischen der Polyethylenoxidkomponente und der Alkoxysilankomponente umfasst.

5.  Zusammensetzung nach einem der Ansprüche 1-4, wobei die Alkoxysilankomponente durch Formel II dargestellt ist:

$$(R^1)_{4-x}Si(OR^2)_x$$

wobei $R^1$ unabhängig aus der Gruppe ausgewählt ist, die aus Wasserstoff, $C_1$-$C_{20}$-Alkyl, $C_1$-$C_{20}$-Alkenyl, $C_1$-$C_{20}$-Alkin besteht; $R^2$ unabhängig aus der Gruppe ausgewählt ist, die aus $C_1$-$C_{20}$-Alkyl, $C_1$-$C_{20}$-Alkenyl, $C_1$-$C_{20}$-Alkin besteht; und x eine ganze Zahl im Bereich von 1 bis 3 ist;

wobei die extrudierte Sauerstoffsperrschicht vorzugsweise weiter eine Aminosilankomponente umfasst, dargestellt durch Formel III:

$$((R^4)N-R^5)_{(4-y)}Si(OR^3)_y$$

wobei $R^3$ und $R^5$ unabhängig voneinander aus der Gruppe ausgewählt sind, die aus $C_1$-$C_{20}$-Alkyl, $C_1$-$C_{20}$-Alkenyl, $C_1$-$C_{20}$-Alkin besteht; $R^4$ unabhängig aus der Gruppe ausgewählt ist, die aus Wasserstoff, $C_1$-$C_{20}$-Alkyl, $C_1$-$C_{20}$-Alkenyl und $C_1$-$C_{20}$-Alkin besteht; und y eine beliebige ganze Zahl im Bereich von 1 bis 3 ist.

6.  Zusammensetzung nach einem der Ansprüche 1-5, wobei die Alkoxysilankomponente in einer Menge im Bereich von 0,2 Gew.-% bis 10 Gew.-% der extrudierten Sauerstoffsperrschicht vorhanden ist.

7.  Zusammensetzung nach einem der Ansprüche 1-6, wobei die extrudierte Sauerstoffsperrschicht einen Wasserkontaktwinkel im Bereich von 75° bis 110° aufweist, wobei vorzugsweise die Differenz zwischen dem Wasserkontaktwinkel der extrudierten Sauerstoffsperrschicht und entweder dem Wasserkontaktwinkel der ersten polymeren Feuchtigkeitssperrschicht oder dem Wasserkontaktwinkel der zweiten polymeren Feuchtigkeitssperrschicht im Bereich von 0° bis 55° liegt.

8.  Zusammensetzung nach einem der Ansprüche 1-7, wobei die extrudierte Sauerstoffsperrschicht weiter eine Vielzahl von Siliziumdioxidnanopartikeln umfasst, die jeweils eine Partikelgröße im Bereich von 5 Nanometern bis 500 Nanometern aufweisen.

9.  Zusammensetzung nach einem der Ansprüche 1-8, wobei die extrudierte Sauerstoffsperrschicht eine Sauerstoffdurchlassrate im Bereich von 0,01 cc/m$^2$/Tag bis 20 cc/m$^2$/Tag aufweist, bestimmt gemäß AST D3985-05 bei einer Temperatur von 23°C und einer relativen Luftfeuchtigkeit von 0 %; und/oder

wobei die erste polymere Feuchtigkeitssperrschicht und die zweite polymere Feuchtigkeitssperrschicht eine Wasserdampfdurchlassrate im Bereich von 0,1 g/m$^2$/Tag bis 20 g/m$^2$/Tag aufweist, wenn gemäß den Verfahren von ASTM F1249 oder ASTM E96 bestimmt.

10.  Zusammensetzung nach einem der Ansprüche 1-9, wobei das erste nicht-polare Polymer und das zweite nicht-polare Polymer unabhängig voneinander aus der Gruppe ausgewählt sind, die aus Polyethylen, Polypropylen, Polyethylenterephthalat, Polybutylenterephthalat und Kombinationen davon besteht.

11. Zusammensetzung nach einem der Ansprüche 1-10, wobei die Folie eine relative Sauerstoffdurchlassrate im Bereich von 0 % bis 150 % aufweist, wenn unter Verwendung von Formel (IV) bestimmt:

$$\text{Relative Sauerstoffdurchlassrate} = (((OTR)_{Rhx} - (OTR)_{Rh0})/ (OTR)_{Rh0}) \times 100,$$

, wobei

(a) $(OTR)_{Rnx}$ die Sauerstoffdurchlassrate der Folie ist, die bei einer relativen Luftfeuchtigkeit von Rhx im Bereich von 0 % bis 80 % mit einer Expositionszeit im Bereich von 24 Stunden bis 48 Stunden gemessen wurde,
(b) $(OTR)_{Rh0}$ die Sauerstoffdurchlassrate der Folie ist, die bei einer relativen Luftfeuchtigkeit von 0 % mit einer Expositionszeit von 24 Stunden bis 48 Stunden gemessen wurde.

12. Verfahren zur Herstellung der Zusammensetzung nach einem der Ansprüche 1-11, wobei die extrudierte Sauerstoffsperrschicht durch ein Verfahren hergestellt wird, das Folgendes umfasst:

(a) Mischen der Polyethylenoxidkomponente mit einer Alkoxysilankomponente und Bilden eines Gemischs;
(b) Zuführen des Gemischs in eine Zuführzone eines Extruders und Bilden einer Vorläufermischung;
(c) Schmelzmischen der Vorläufermischung im Extruder mit gegenläufigen Schnecken und Bilden einer extrudierten Mischung; und
(d) Folienextrudieren der extrudierten Mischung und Bilden der extrudierten Sauerstoffsperrschicht.

13. Prozess zum Herstellen einer Zusammensetzung, die eine Folie umfasst, wobei der Prozess Folgendes umfasst:

(a) Extrudieren eines ersten nicht-polaren Polymers in einem ersten Extruder und Bilden einer ersten polymeren Feuchtigkeitssperrschicht;
(b) Extrudieren eines zweiten nicht-polaren Polymers in einem zweiten Extruder und Bilden einer zweiten polymeren Feuchtigkeitssperrschicht;
(c) Extrudieren eines Gemischs, umfassend: (i) eine Polyethylenoxidkomponente und (ii) eine Alkoxysilankomponente, in einem dritten Extruder und Bilden einer extrudierten Sauerstoffsperrschicht; und
(d) Laminieren der extrudierten Sauerstoffsperrschicht zwischen der ersten polymeren Feuchtigkeitssperrschicht und der zweiten polymeren Feuchtigkeitssperrschicht und Bilden der Zusammensetzung.

14. Zusammensetzung nach einem der Ansprüche 1-3, umfassend eine Folie, die Folgendes aufweist:

(a) eine erste polymere Feuchtigkeitssperrschicht, die ein erstes nicht-polares Polymer umfasst, das aus der Gruppe ausgewählt ist, die aus Polyethylen, Polypropylen, Polyethylenterephthalat, Polybutylenterephthalat und Kombinationen davon besteht;
(b) eine zweite polymere Feuchtigkeitssperrschicht, die ein zweites nicht-polares Polymer umfasst, das aus der Gruppe ausgewählt ist, die aus Polyethylen, Polypropylen, Polyethylenterephthalat (PET), Polybutylenterephthalat und Kombinationen davon besteht; und
(c) mindestens eine extrudierte Sauerstoffsperrschicht, die zwischen der ersten Feuchtigkeitssperrschicht und der zweiten Feuchtigkeitssperrschicht positioniert ist, umfassend:

(i) 90 Gew.-% bis 99,8 Gew.-% einer Polyethylenoxidkomponente;
(ii) 0,2 Gew.-% bis 10 Gew.-% einer Alkoxysilankomponente;
(iii) mehr als 0 Gew.-% bis 2 Gew.-% einer Aminosilankomponente; und
(iv) mehr als 0 Gew.-% bis 2 Gew.-% einer Vielzahl von Siliziumdioxidnanopartikeln;

wobei die extrudierte Folie eine Dicke aufweist, die im Bereich von 50 Mikrometern bis 200 Mikrometern liegt.

**Revendications**

1. Composition comprenant un film, présentant :

a) une première couche barrière polymère contre l'humidité comprenant un premier polymère non polaire ;
b) une seconde couche barrière polymère contre l'humidité comprenant un second polymère non polaire ; et
c) au moins une couche barrière contre l'oxygène extrudée positionnée entre la première couche barrière polymère contre l'humidité et la seconde couche barrière polymère contre l'humidité ;
dans laquelle la couche barrière contre l'oxygène extrudée comprend un mélange de (i) un composant d'oxyde de polyéthylène et (ii) un composant alcoxysilane ;
de préférence dans laquelle le film présente une épaisseur allant de 30 micromètres à 52 micromètres.

2. Composition selon la revendication 1, dans laquelle le composant d'oxyde de polyéthylène est représenté par la Formule I :

$$H\text{-}(O\text{-}CH_2\text{-}CH_2\text{-})_n\text{-}O\text{-}H$$

dans laquelle « n » est un nombre entier présentant une valeur allant de 1 à 100.

3. Composition selon l'une quelconque des revendications 1-2, dans laquelle le composant d'oxyde de polyéthylène est présent en une quantité allant d'environ 90 % en poids à environ 99,8 % en poids de la couche barrière contre l'oxygène extrudée.

4. Composition selon l'une quelconque des revendications 1-3, dans laquelle le mélange comprend plus de 0 % en poids à 5 % en poids d'un produit de réaction de polycondensation entre le composant d'oxyde de polyéthylène et le composant alcoxysilane.

5. Composition selon l'une quelconque des revendications 1-4, dans laquelle le composant alcoxysilane est représenté par la Formule II :

$$(R^1)_{4\text{-}x}Si(OR^2)_x$$

dans laquelle $R^1$ est indépendamment choisi dans le groupe consistant en un hydrogène, un alkyle en $C_1$-$C_{20}$, un alcényle en $C_1$-$C_{20}$, un alcyne en $C_1$-$C_{20}$ ; $R^2$ est indépendamment choisi dans le groupe consistant en un alkyle en $C_1$-$C_{20}$, un alcényle en $C_1$-$C_{20}$, un alcyne en $C_1$-$C_{20}$ ; et x est un nombre entier allant de 1 à 3 ;
de préférence dans laquelle la couche barrière contre l'oxygène extrudée comprend en outre un composant aminosilane représenté par la Formule III :

$$((R^4)N\text{-}R^5)_{(4\text{-}y)}Si(OR^3)_y$$

dans laquelle $R^3$ et $R^5$ sont indépendamment choisis dans le groupe consistant en un alkyle en $C_1$-$C_{20}$, un alcényle en $C_1$-$C_{20}$, un alcyne en $C_1$-$C_{20}$ ; $R^4$ est indépendamment choisi dans le groupe consistant en un hydrogène, un alkyle en $C_1$-$C_{20}$, un alcényle en $C_1$-$C_{20}$ et un alcyne en $C_1$-$C_{20}$ ; et y est un nombre entier quelconque allant de 1 à 3.

6. Composition selon l'une quelconque des revendications 1-5, dans laquelle le composant alcoxysilane est présent en une quantité allant de 0,2 % en poids à 10 % en poids de la couche barrière contre l'oxygène extrudée.

7. Composition selon l'une quelconque des revendications 1-6, dans laquelle la couche barrière contre l'oxygène extrudée présente un angle de contact avec l'eau allant de 75° à 110°, de préférence dans laquelle la différence entre l'angle de contact avec l'eau de la couche barrière contre l'oxygène extrudée et l'angle de contact avec l'eau de la première couche barrière polymère contre l'humidité ou l'angle de contact avec l'eau de la seconde couche barrière polymère contre l'humidité se trouve dans la plage de 0° à 55°.

8. Composition selon l'une quelconque des revendications 1-7, dans laquelle la couche barrière contre l'oxygène extrudée comprend en outre une pluralité de nanoparticules de silice, chacune présentant une taille de particules allant de 5 nanomètres à 500 nanomètres.

9. Composition selon l'une quelconque des revendications 1-8, dans laquelle la couche barrière contre l'oxygène extrudée présente un taux de transmission d'oxygène allant de 0,01 cc/m²/jour à 20 cc/m²/jour, déterminé conformément à la norme AST D3985-05 à une température de 23°C et à une humidité relative de 0 % ; et/ou dans laquelle la première couche barrière polymère contre l'humidité et la seconde couche barrière polymère contre l'humidité présentent un taux de transmission de vapeur d'eau allant de 0,1 $g/m^2$/jour à 20 $g/m^2$/jour lorsqu'il est déterminé conformément aux procédés ASTM F1249 ou ASTM E96.

**10.** Composition selon l'une quelconque des revendications 1-9, dans laquelle le premier polymère non polaire et le second polymère non polaire sont indépendamment choisis dans le groupe consistant en le polyéthylène, le polypropylène, le polyéthylène téréphtalate, le polybutylène téréphtalate et leurs combinaisons.

**11.** Composition selon l'une quelconque des revendications 1-10, dans laquelle le film présente un taux de transmission d'oxygène relatif allant de 0 % à 150 %, lorsqu'il est déterminé à l'aide de la Formule (IV) :

$$\text{Taux de transmission relatif de l'oxygène} = (((OTR)_{Rhx} - (OTR)_{Rh0}) / (OTR)_{Rh0}) \times 100$$

dans laquelle,

(a) $(OTR)_{Rhx}$ est le taux de transmission d'oxygène du film mesuré à une humidité relative de Rhx allant de 0 % à 80 % avec un temps d'exposition allant de 24 heures à 48 heures,
(b) $(OTR)_{Rh0}$ est le taux de transmission d'oxygène du film mesuré à une humidité relative de 0 %, avec un temps d'exposition allant de 24 heures à 48 heures.

**12.** Procédé de préparation de la composition selon l'une quelconque des revendications 1-11, dans lequel la couche barrière contre l'oxygène extrudée est préparée par un procédé comprenant :

a) le mélange du composant d'oxyde de polyéthylène avec un composant alcoxysilane et la formation d'un mélange ;
b) l'introduction du mélange dans une zone d'alimentation d'une extrudeuse et la formation d'un mélange précurseur ;
c) le mélange à l'état fondu du mélange précurseur dans l'extrudeuse avec des vis contrarotatives et la formation d'un mélange extrudé ; et
d) l'extrusion du film du mélange extrudé et la formation de la couche barrière à l'oxygène extrudée.

**13.** Processus de préparation d'une composition comprenant un film, dans lequel le processus comprend :

a) l'extrusion d'un premier polymère non polaire dans une première extrudeuse et la formation d'une première couche barrière polymère contre l'humidité ;
b) l'extrusion d'un second polymère non polaire dans une deuxième extrudeuse et la formation d'une seconde couche barrière polymère contre l'humidité ;
c) l'extrusion d'un mélange comprenant : (i) un composant d'oxyde de polyéthylène et (ii) un composant alcoxysilane, dans une troisième extrudeuse et la formation d'une couche barrière contre l'oxygène extrudée ; et
d) la stratification de la couche barrière contre l'oxygène extrudée entre la première couche barrière polymère contre l'humidité et la seconde couche barrière polymère contre l'humidité et la formation de la composition.

**14.** Composition selon l'une quelconque des revendications 1-3 comprenant un film, présentant :

a) une première couche barrière polymère contre l'humidité comprenant un premier polymère non polaire choisi dans le groupe consistant en le polyéthylène, le polypropylène, le polyéthylène téréphtalate, le polybutylène téréphtalate et leurs combinaisons ;
b) une seconde couche barrière polymère contre l'humidité comprenant un second polymère non polaire choisi dans le groupe constitué par le polyéthylène, le polypropylène, le polyéthylène téréphtalate (PET), le polybutylène téréphtalate et leurs combinaisons ; et
c) au moins une couche barrière contre l'oxygène extrudée positionnée entre la première couche barrière contre l'humidité et la seconde couche barrière contre l'humidité, comprenant :

(i) de 90 % en poids à 99,8 % en poids d'un composant d'oxyde de polyéthylène ;

(ii) de 0,2 % en poids à 10 % en poids d'un composant alcoxysilane ;
(iii) plus de 0 % en poids à 2 % en poids d'un composant aminosilane ; et
(iv) plus de 0 % en poids à 2 % en poids d'une pluralité de nanoparticules de silice ;

dans laquelle le film extrudé présente une épaisseur allant de 50 micromètres à 200 micromètres.

Fig.1

Fig.2

**Fig.3**

**Fig.4**

**EP 3 837 111 B1**

**REFERENCES CITED IN THE DESCRIPTION**

**Patent documents cited in the description**

- WO 2007026935 A
- US 7405009 B
- EP 0801168 A1